# EUROPEAN PATENT APPLICATION

(11) **EP 1 566 724 A2**
(43) Date of publication of application: **24.08.2005**
(21) Application number: 05100944.7
(22) Date of filing: 10.02.2005
(51) Int. Cl.: G06F 1/26, G06F 3/02, G06F 3/033

(54) **Kinetic energy utilizing input device**

(30) Priority: 10.02.2004 US 775304
(71) Applicant: MICROSOFT CORPORATION, Redmond, WA 98052 (US)
(72) Inventor: Lacey, Gordan R., Redmond, WA 98052 (US); Orr, James A., Redmond, WA 98025 (US)
(74) Representative: Grünecker, Kinkeldey, Stockmair & Schwanhäusser Anwaltssozietät

(57) **Abstract**

A user input device for communicating a user input to a computer. The user input device includes a user input detecting element and a kinetic energy converting device. The user input detecting element detects a user input. The kinetic energy converting device converts kinetic energy supplied to the user input device by a user to electrical energy. The electrical energy from the kinetic energy converting device is used to communicate a user input detected by the user input detecting element to the computer and/or charge a battery of the user input device and/or a system battery of the computer.

## Description

### Field of the Invention

The present disclosure concerns input devices for computers and, in particular, the present disclosure concerns an input device that converts kinetic energy provided by a user to electrical energy.

### Background Art

User input devices that allow users to enter data into various types of computers are well known. Examples of existing user input devices include the keyboard, mouse, light pen, tablet, touch panel, trackball, joystick, and game pad. Typically, these user input devices are connected to computers by multiple wires bundled in a cable. Several limitations are presented by user input devices that are connected to computers by cables. For example, the cables of input devices often clutter a user's work area, become tangled, are too short, and/or are inadvertently disconnected from the computer.

Wireless user input devices, such as the wireless keyboard and the wireless mouse, have been developed. Wireless input devices include a transmitter that communicates with a receiver that is connected to the computer. Wireless input devices overcome many of the disadvantages of input devices connected to computers by cables. The clutter of a user's work area is eliminated. There are no cables connected to the input device to become tangled, limit the distance the input device can be moved from the computer, or be pulled upon to disconnect the input device from the computer.

Wireless input devices are typically powered by batteries. Components of the wireless input device, such as the transmitter, drain the batteries over a period of time. The batteries are eventually drained and need to be replaced, causing inconvenience for the user.

There is a need for an input device that converts kinetic energy provided by a user to electrical energy that is used to communicate with a computer and/or charge a battery. Such an input device greatly increases the time interval for changing batteries, eliminates the need to change the batteries, and/or eliminates the need for batteries altogether.

### Summary

The present disclosure concerns an input device that converts kinetic energy supplied by a user to electrical energy that is used by one or more components of a computer system. In one embodiment, the user input device is a wireless user input device for communicating a user input to a computer. The user input device includes a user input detecting element, a kinetic energy converting device, and a transmitter. The user input detecting element detects a user input. The kinetic energy converting device converts kinetic energy supplied to the user input device by the user to electrical energy. The transmitter is in communication with the user input detecting element. The transmitter uses electrical energy from the kinetic energy converting device to communicate a user input detected by the user input detecting element to the computer.

In one embodiment, a battery is electrically connected to the kinetic energy converting device. In one embodiment, the battery powers a transmitter of a wireless input device and is charged by the kinetic energy converting device. I another embodiment, the battery powers a computer system. A charging circuit is electrically connected to the kinetic energy converting device and the battery. In one embodiment, the charging circuit rectifies and regulates voltage from the kinetic energy converting device to charge the battery.

In one embodiment, the kinetic energy converting device is a piezoelectric device. Examples of piezoelectric devices that may be used include piezoelectric transformers and piezoelectric actuators. Many other types of kinetic energy converting devices, such as a generator, could be used.

In one embodiment, the user input device is a wireless keyboard. In this embodiment, the user input detecting element comprises a plurality of keys of a wireless keyboard. Pressing of a keyboard key causes the transmitter to communicate a signal to the computer that corresponds to the key. Kinetic energy supplied by pressing the key is converted to electrical energy by the kinetic energy converting device. Keys may be coupled to piezoelectric devices that convert some of the mechanical energy of the key to electrical energy. For example, pressing of the keyboard key may flex a piezoelectric to transfer kinetic energy of the keyboard key to the piezoelectric device. Movement of multiple different keyboard keys may apply kinetic energy to a single piezoelectric device or movement of a single key, such as the spacebar, may apply kinetic energy to several piezoelectric devices.

In one embodiment, the user input device is a mouse. In this embodiment, a motion sensing element, such as a ball, of a computer mouse is coupled to the kinetic energy converting device. The buttons of the mouse are coupled to a kinetic energy converting device in one embodiment.

In one embodiment, the wireless user input device is used in a method of communicating a user input to a computer. In the method, kinetic energy of the user input device is converted to electrical energy. The electrical energy is provided to a transmitter. A user input provided to the user input device is transmitted to the computer.

In one embodiment, a user input device forms part of a computer system. The computer system includes a display, memory, a battery, a processor, and a user input device that converts kinetic energy provided by a user to electrical energy that is used to charge the battery. Machine instructions are stored in the memory. The processor is coupled to the display, the memory, and the wireless user input device. The processor executes the machine instructions to carry out a plurality of functions, including functions requested by a user through the wireless user input device.

These and other objects and advantages of exemplary input devices are more completely described in conjunction with the accompanying drawings.

### Brief Description of the Drawings

Figure 1 is a schematic depiction of a computer system used in practicing an exemplary embodiment of the disclosed method;
Figure 2 is a flow chart that illustrates a method of utilizing energy provided to a wireless input device by a user to communicate with a computer;
Figure 3 is a schematic illustration of a wireless user input computer system that utilizes energy provided to a wireless input device by a user to communicate with a computer;
Figure 4 is a schematic illustration of a wireless user input computer system that utilizes energy provided to a wireless input device by a user to communicate with a computer;
Figure 5 is a schematic illustration of a wireless keyboard that utilizes energy provided to the keyboard by a user to communicate with a computer;
Figure 6 is a schematic illustration of a keyboard key coupled to a kinetic energy converting device in a released state;
Figure 7 is a schematic illustration of a keyboard key coupled to a kinetic energy converting device in a pressed state;
Figure 8 is a view taken along the plane indicated by lines 8-8 of Figure 7;
Figure 9 is a view taken along the plane indicated by lines 9-9 of Figure 7;
Figure 10 is a schematic illustration of a keyboard space key coupled to a kinetic energy converting device in a released state;
Figure 11 is a schematic illustration of a keyboard space key coupled to a kinetic energy converting device in a pressed state;
Figure 12 is a view taken along the plane indicated by lines 12-12 of Figure 11;
Figure 13 is a view taken along the plane indicated by lines 13-13 of Figure 11;
Figure 14 is a schematic illustration of multiple keyboard keys coupled to a single kinetic energy converting devices;
Figure 15 is a schematic illustration of multiple keyboard keys coupled to a single kinetic energy converting devices with one of the keyboard keys in a pressed state;
Figure 16 is a schematic illustration of a single keyboard keys coupled to a multiple kinetic energy converting devices;
Figure 17 is a schematic illustration of a kinetic energy converting device providing electrical energy to a battery charger;
Figure 18 is a schematic illustration of a wireless mouse that utilizes energy provided to the mouse by a user to communicate with a computer; and
Figure 19 is an illustration of a notebook computer that includes a kinetic energy converting user input device.

### Detailed Description

### Exemplary Operating Environment

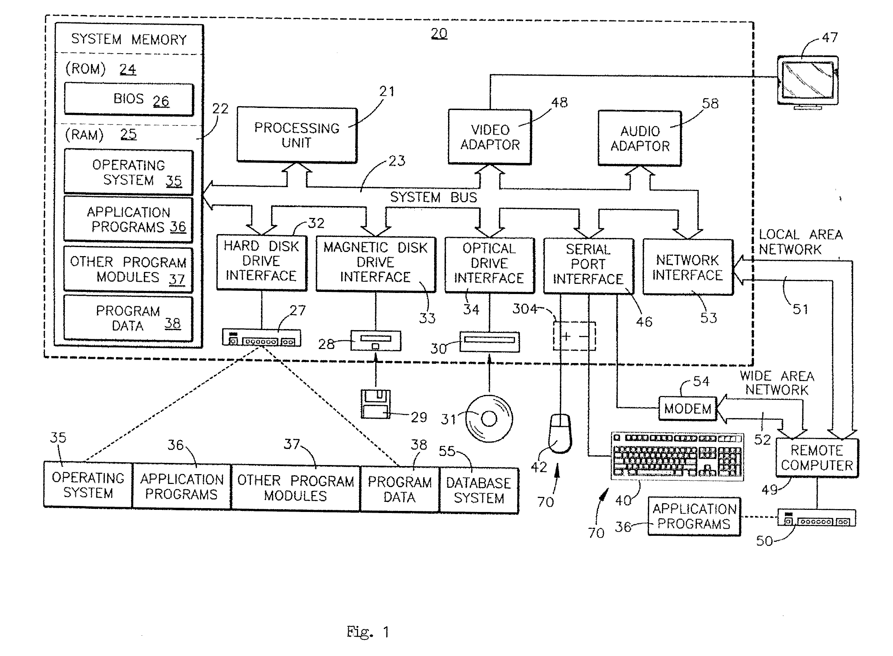

Figure 1 and the following discussion are intended to provide a brief, general description of a suitable computing environment in which the invention may be implemented. Although not required, the invention will be described in the general context of computer-executable instructions, such as program modules, being executed by a personal computer. Generally, program modules include routines, programs, objects, components, data structures, etc., that perform particular tasks or implement particular abstract data types. Moreover, those skilled in the art will appreciate that the invention may be practiced with other computer system configurations, including handheld devices, multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to Figure 1, an exemplary system for implementing the invention includes a general purpose computing device in the form of a conventional personal computer 20, including a processing unit 21, a system memory 22, and a system bus 24 that couples various system components including system memory 22 to processing unit 21. System bus 23 may be any of several types of bus structures including a memory bus or memory controller, a peripheral bus, and a local bus using any of a variety of bus architectures. System memory 22 includes read only memory (ROM) 24 and random access memory (RAM) 25. A basic input/output system (BIOS) 26, containing the basic routines that help to transfer information between elements within personal computer 20, such as during start-up, is stored in ROM 24. Personal computer 20 further includes a hard disk drive 27 for reading from and writing to a hard disk, a magnetic disk drive 28 for reading from or writing to a removable magnetic disk 29 and an optical disk drive 30 for reading from or writing to a removable optical disk 31 such as a CD ROM or other optical media. Hard disk drive 27, magnetic disk drive 28, and optical disk drive 30 are connected to system bus 23 by a hard disk drive interface 32, a magnetic disk drive interface 33, and an optical drive interface 34, respectively. The drives and their associated computer-readable media provide nonvolatile storage of computer-readable instructions, data structures, program modules and other data for personal computer 20. Although the exemplary environment described herein employs a hard disk 27, a removable magnetic disk 29 and a removable optical disk 31, it should be appreciated by those skilled in the art that other types of computer-readable media which can store data that is accessible by computer, such as random access memories (RAMs), read only memories (ROMs), and the like may also be used in the exemplary operating environment.

A number of program modules may be stored on the hard disk 27, magnetic disk 29, optical disk 31, ROM 24 or RAM 25, including an operating system 35, one or more application programs 36, other program modules 37, and program data 38. A database system 55 may also be stored on the hard disk, magnetic disk 29, optical disk 31, ROM 24 or RAM 25. A user may enter commands and information into personal computer 20 through input devices such as a keyboard 40 and pointing device 42. Other input devices may include a microphone, joystick, game pad, satellite dish, scanner, or the like. These and other input devices are often connected to processing unit 21 through a serial port interface 46 that is coupled to system bus 23, but may be connected by other interfaces, such as a parallel port, game port or a universal serial bus (USB). A monitor 47 or other type of display device is also connected to system bus 23 via an interface, such as a video adapter 48. In addition to the monitor, personal computers typically include other peripheral output devices such as speakers and printers.

Personal computer 20 may operate in a networked environment using logical connections to one or more remote computers, such as a remote computer 49. Remote computer 49 may be another personal computer, a server, a router, a network PC, a peer device or other common network node, and typically includes many or all of the elements described above relative to personal computer 20, although only a memory storage device 50 has been illustrated in Figure 1. The logical connections depicted in Figure 1 include local area network (LAN) 51 and a widearea network (WAN) 52. Such networking environments are commonplace in offices, enterprise-wide computer networks, intranets, and the Internet.

When using a LAN networking environment, personal computer 20 is connected to local network 51 through a network interface or adapter 53. When used in a WAN networking environment, personal computer 20 typically includes a modem 54 or other means for establishing communication over wide area network 52, such as the Internet. Modem 54, which may be internal or external, is connected to system bus 23 via serial port interface 46. In a networked environment, program modules depicted relative to personal computer 20, or portions thereof, may be stored in remote memory storage device 50. It will be appreciated that the network connections shown are exemplary and other means of establishing a communications link between the computers may be used.

### Wireless Input Device That Utilizes User Energy

The present disclosure concerns a user input device 70 that utilizes kinetic or mechanical energy provided by a user. In one embodiment, the user input device 70 is a wireless user input device that uses the energy provided by the user to transmit to a computer. In another embodiment, the user input device is a component of a computer system that is charged by energy from the user input device.

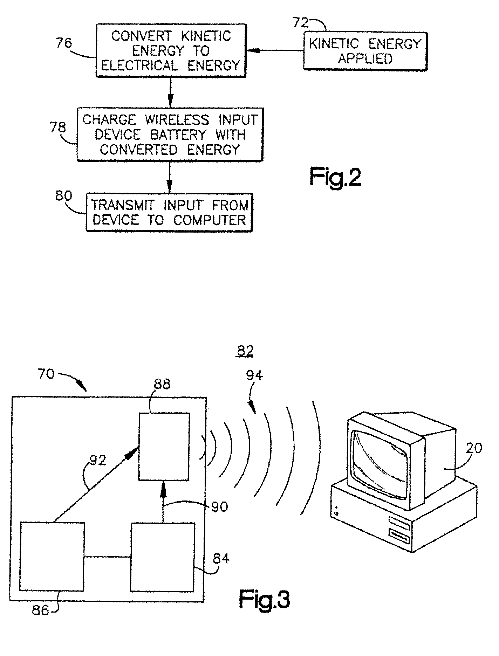

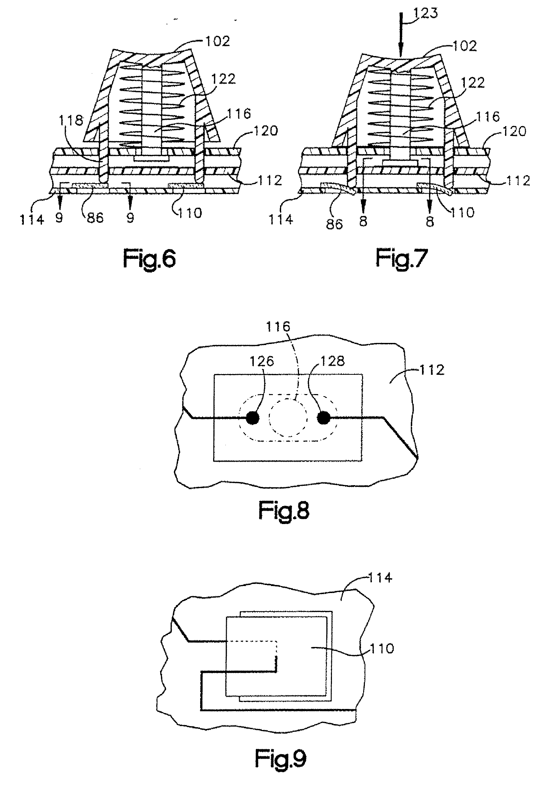

Figure 2 is a flow chart that illustrates a method of transmitting input from the wireless user input device 70 to a computer 20. In the method, kinetic energy is applied 72 to a user input device 70 by the user. For example, the user may press keys of a wireless keyboard 40' (Figure 5), press buttons 74 of a mouse 42' (Figure 18), move a mouse, or move any other type of user input device to apply kinetic energy to the device. The kinetic energy is converted 76 to electrical energy. The electrical energy is used to transmit 80 input from the wireless input device to the computer 20. In the embodiment illustrated by Figure 2, the electrical energy is stored 78 before it is used to transmit 80 input from the wireless input device 70 to the computer 20. In another embodiment, the electrical energy is not stored. In this embodiment, kinetic energy from a user input is converted to electrical energy that is used to transmit as the user provides input.

Figure 3 schematically illustrates a system 82 that includes a wireless user input device 70 and a personal computer 20. In the embodiment illustrated by Figure 3, the wireless user input device 70 includes a user input detecting element 84, a kinetic energy converting device 86, and a transmitter 88. The user input detecting element 84 detects or facilitates input by a user with the wireless input device. Examples of user input detecting elements include keys of a keyboard, a ball of a mouse, buttons of a mouse and/or any other component of.a user input device that is moved by the user. In the embodiment illustrated by Figure 3, the kinetic energy converting device 86 is mechanically linked to the user input detecting element 84. In the exemplary embodiment, the kinetic energy converting device converts kinetic energy supplied to the user input device 70 by the user to electrical energy. The user input detecting element 84 communicates the user input to the transmitter as indicated by arrow 90. The kinetic energy converting device 86 is electrically connected to the transmitter 88 as indicated by arrow 92. The transmitter 88 uses the electrical energy to communicate 94 user inputs detected by the user input detecting element 84 to the computer 20.

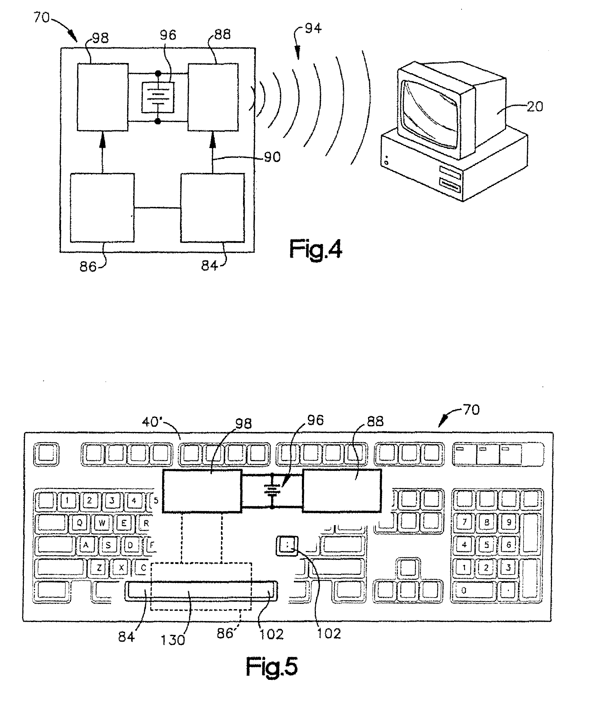

Figure 4 illustrates an embodiment where the electrical energy from the kinetic energy converting device 86 is stored 78 before it is used to transmit 80 input from the wireless input device 70 to the computer 20. In this embodiment, a battery 96 and a battery charging circuit 98 are interposed between the kinetic energy converting device 86 and the transmitter 88. The battery charging circuit 98 rectifies and regulates voltage from the kinetic energy converting device 86 to charge the battery 96 in a manner that is well known in the art. The battery 96 powers the transmitter 88.

Figure 5 illustrates an example where the wireless user input device 70 is a wireless keyboard 40'. The wireless keyboard 40' includes a plurality of keys 102 that allow a user to input data, one or more kinetic energy converting devices 86, a battery 96, a charge circuit 98, and a transmitter 88. The one or more keys 102 are coupled one or more kinetic energy converting devices 86. The one or more kinetic energy converting devices 86 convert kinetic energy supplied to one or more of the keys by the user to electrical energy. In the embodiment illustrated by Figure 5, this electrical energy is provided to the charging circuit 98 that charges the battery. The transmitter 88 is provided with signals that indicate pressing and releasing of the keys 102. The transmitter 88 uses the electrical energy stored in the battery 96 to communicate the key signals to the computer 20.

Figures 6-9 illustrate an example of kinetic energy converting devices 86 coupled to keyboard keys 102. In the example of Figures 6-9, the kinetic energy converting device is a piezoelectric device 110. Types of piezoelectric devices that could be used include piezoelectric transformers and piezoelectric actuators used with capacitors.

Referring to Figures 6-9, a keyboard key 102 is coupled to a key signal circuit 112 that provides key signals to the transmitter 88 and is coupled to a piezoelectric circuit 114 that electrically connects the piezoelectric devices 110 to the charge circuit 98. In the exemplary embodiment, the key signal circuit 112 and the piezoelectric circuit 114 are defined on thin flexible circuit boards. It should be readily apparent that the key signal circuit and the piezoelectric circuit could be defined on a single flexible circuit board and/or formed on any other material. The illustrated key 102 includes a signal post 116 and a pair of f piezoelectric engaging posts 118. It should be readily apparent that the key could include a single piezoelectric post coupled to a single piezoelectric device. The illustrated key 102 is supported by a plastic support member 120. The signal post 116 and the pair of piezoelectric engaging posts 118 extend through openings in the support member. A spring 122 is disposed around the signal post 116 between an inner surface of the key 102 and an outer surface of the support member 120. The spring biases the key to the released position illustrated by Figure 6. The signal post 116 is in communication with the key signal circuit 112. When the key 102 is pressed as indicated by arrow 123 in Figure 7, the signal post 116 bridges a pair of contacts 126, 128 of the of the key signal circuit 112 as illustrated by Figure 8. Bridging the pair of contacts 126, 128 causes a key signal to be provided to the transmitter 88 and communicated to the computer 20. The piezoelectric engaging posts 118 extend through openings in the key signal circuit 112 and are in communication with piezoelectric devices 110 on the piezoelectric circuit 114. When the key 102 is pressed, the piezoelectric engaging posts 118 engage and flex the piezoelectric devices 110 as illustrated by Figure 7. Flexing the piezoelectric devices 110 causes the piezoelectric devices to oscillate. As the piezoelectric device oscillates, the piezoelectric device provides an electric charge to the charge circuit by way of the piezoelectric circuit 114.

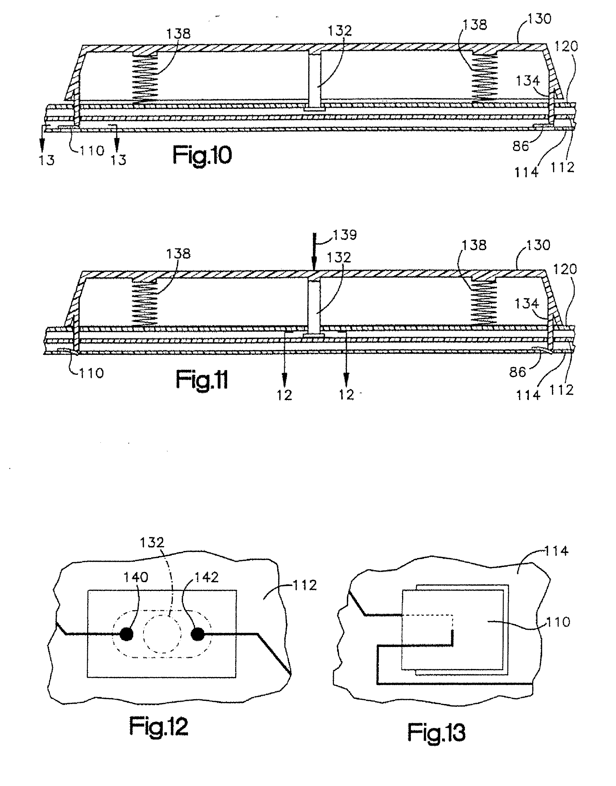

Figures 10-13 illustrate an example where pressing a "space" key 130 applies kinetic energy to a pair of piezoelectric devices 110. The "space" key 130 is coupled to the key signal circuit 112 and to the piezoelectric circuit 114. The illustrated "space" key 130 includes a signal post 132 and a pair of piezoelectric engaging posts 134. The signal post 132 and the pair of piezoelectric engaging posts 134 extend through openings in support member 120. A pair of springs 138 are disposed between the "space" key 130 and the support member 120. The springs bias the "space" key to the released position illustrated by Figure 10. The signal post 132 is in communication with the key signal circuit 112. When the "space" key 130 is pressed as indicated by arrow 139 in Figure 11, the signal post 132 bridges a pair of contacts 140, 142 of the of the key signal circuit 112 as illustrated by Figure 12. Bridging the pair of contacts 140, 142 causes a "space" key signal to be provided to the transmitter 88 and communicated to the computer 20. The piezoelectric engaging posts 134 extend through openings in the key signal circuit 112 and are in communication with piezoelectric devices 110 on the piezoelectric circuit 114. When the "space" key 130 is pressed, the piezoelectric engaging posts 134 engage and flex the piezoelectric devices 110 as illustrated by Figure 11. It should be readily apparent that multiple piezoelectric devices could be coupled to the "space" key by adding posts to the "space" key.

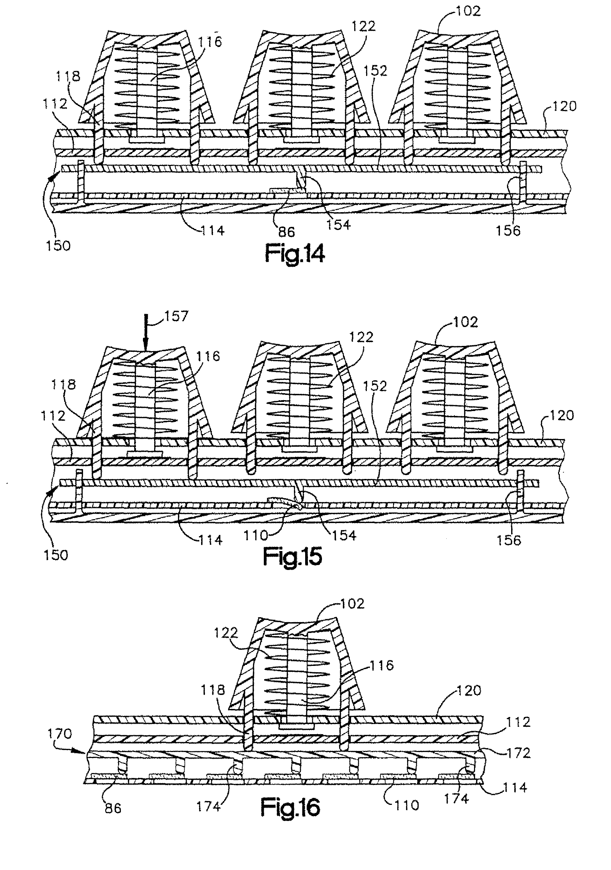

Figures 14 and 15 illustrate an example where multiple keyboard keys 102 apply kinetic energy to a single piezoelectric device 110. In the example of Figures 14 and 15, each key 102 includes a signal post 116 and a pair of piezoelectric engaging posts 118. The illustrated keys 102 are supported by a plastic support member 120. The signal posts 116 and the pair of piezoelectric engaging posts 118 extend through openings in the support member. A spring 122 disposed around the signal post 116 of each key biases the keys to their released positions as illustrated by Figure 14. When one of the keys is pressed its signal post 116 bridges a pair of contacts of the key signal circuit 112. The piezoelectric engaging posts 118 of each key extend through openings in the key signal circuit 112 and are in communication with a coupling member 150. The coupling member includes a plate portion 152 and a piezoelectric engaging post 154. The coupling member 150 is restricted to substantially transverse movement with respect to the piezoelectric device 110 by guide pins 156 that extend through openings in the plate portion 152. When one of the keys 102 is pressed as illustrated arrow 157 in Figure 15, the piezoelectric engaging posts 118 engage the coupling member plate portion 152. The post 154 engages and flexes the piezoelectric device 110 as illustrated by Figure 15.

Figure 16 illustrates an example where movement of one keyboard key 102 applies kinetic energy to multiple piezoelectric devices 110. In the example of Figure 16, the key 102 includes a signal post 116 and a pair of piezoelectric engaging posts 118. The signal posts 116 and the pair of piezoelectric engaging posts 118 extend through openings in the support member 120. When the key 102 is pressed its signal post 116 bridge a pair of contacts of the key signal circuit. The piezoelectric engaging posts 118 of the key extend through openings in the key signal circuit 112 and are in communication with a coupling member 170. The coupling member includes a plate portion 172 and a plurality of piezoelectric engaging posts 174. The coupling member 150 is restricted to substantially transverse movement with respect to the piezoelectric device 110. When the key 102 is pressed the piezoelectric engaging posts 118 engage the coupling member plate portion 172. The posts 174 engage and flex the piezoelectric devices 110.

Figure 18 illustrates an example where the wireless user input device 70 is a wireless mouse 42'. The illustrated wireless mouse 42' includes a mouse ball 202 and mouse buttons 204 that allow a user to input data, kinetic energy converting devices 86, a battery 96, a charge circuit 98, and a transmitter 88. The mouse balls 202 and the mouse buttons 204 are coupled the kinetic energy converting devices 86 in the illustrated embodiment. In the embodiment illustrated by Figure 18, the mouse ball 202 is coupled to a generator 210 by a wheel 212. In one embodiment, the mouse is an optical mouse (not shown). In the optical mouse embodiment, the mouse may include a kinetic energy converting device that harnesses the kinetic energy of movement of the mouse itself. The one or more kinetic energy converting devices convert kinetic energy supplied to the mouse by the user to electrical energy. This electrical energy is provided to the charging circuit 98 that charges the battery 96. The transmitter 88 is provided with signals that represent the input provided by the mouse. The transmitter 88 uses the electrical energy stored in the battery 96 to communicate the signals to the computer 20.

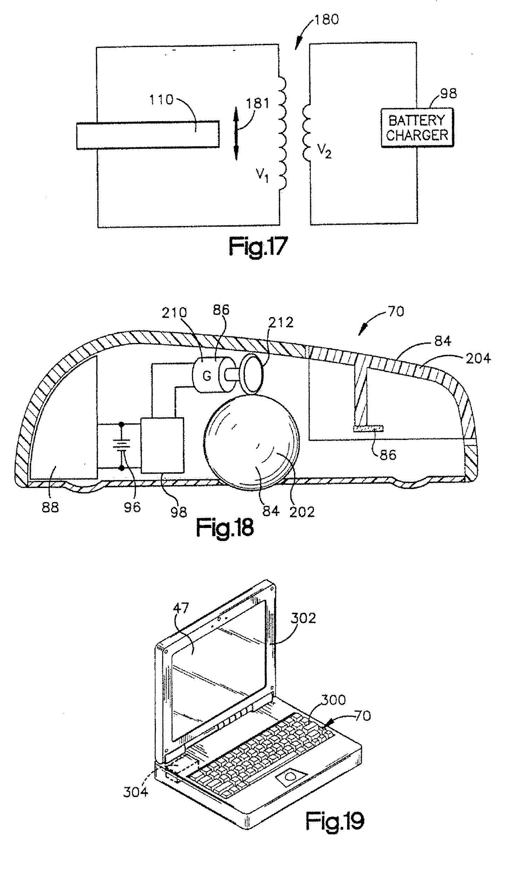

Figure 17 illustrates a piezoelectric device 110 coupled to a battery charge circuit 98 by a transformer 180. The piezoelectric device is flexed when kinetic energy is transferred from the user input device to the piezoelectric device. The piezoelectric device then oscillates 181 and provides an output voltage V₁. This output voltage V₁ is typically very high. The transformer 180 reduces the voltage V₁ from the piezoelectric device to a voltage V₂ that is appropriate for the charging circuit. The charging circuit recitifies and regulates the oscillating voltage from the transformer to charge the user input device battery.

In one embodiment, the wireless user input device 70 is in communication with the computer illustrated by Figure 1. In this embodiment, the mouse 42 shown in Figure 1 is replaced with a wireless mouse 42' and/or the keyboard 40 is replaced with a wireless keyboard 40'.

Referring to Figure 1, in one embodiment the user input device 70 is hard wired to a computer. The mouse 42 and the keyboard 40 shown in Figure 1 are examples of user input devices that are hard wired to a computer 20. Another example is the keyboard 300 of a notebook computer 302 (Figure 19). The notebook computer 302 includes a system battery 304 that powers the notebook computer. The user input device 70 includes a kinetic energy converting device 86, such as the kinetic energy converting devices illustrated in Figures 6,7,9,10,11 and 13. In this embodiment, electrical energy from the kinetic energy converting device is used to charge the system battery 304.

While the present invention has been described with a degree of particularity, it is the intent that the invention include all modifications and alterations falling within the spirit or scope of the appended claims.

## Claims

1. A wireless user input device for communicating a user input to a computer, comprising:
a) a user input detecting element that detects a user input;
b) a kinetic energy converting device that converts kinetic energy supplied to the user input device by the user to electrical energy;
c) a transmitter in communication with the user input detecting element that uses said electrical energy to communicate a user input detected by the user input detecting element to the computer.

2. The wireless input device of claim 1 further comprising a battery electrically connected to the kinetic energy converting device and the transmitter, wherein the battery powers the transmitter and is charged by the kinetic energy converting device.

3. The wireless input device of claim 2 further comprising a charging circuit electrically connected to the kinetic energy converting device and the battery that rectifies and regulates voltage from the kinetic energy converting device to charge the battery.

4. The wireless input device of claim 1 wherein the kinetic energy converting device is a piezoelectric device.

5. The wireless input device of claim 4 wherein the kinetic energy converting device is a piezoelectric transformer.

6. The wireless input device of claim 4 wherein the kinetic energy converting device is a piezoelectric actuator.

7. The wireless input device of claim 1 wherein the kinetic energy converting device is a generator.

8. The wireless input device of claim 1 wherein the user input detecting element comprises a plurality of keys of a wireless keyboard.

9. The wireless input device of claim 8 wherein pressing of a keyboard key causes the transmitter to communicate a signal to the computer that corresponds to the key and wherein kinetic energy supplied by pressing the key is converted to electrical energy by the kinetic energy converting device.

10. The wireless input device of claim 8 wherein the kinetic energy converting device is a piezoelectric device and pressing of a keyboard key applies kinetic energy to the piezoelectric device.

11. The wireless input device of claim 10 wherein pressing of the keyboard key flexes the piezoelectric to transfer kinetic energy of the keyboard key to the piezoelectric device.

12. The wireless input device of claim 1 wherein the user input detecting element comprises keys of a wireless keyboard and the kinetic energy converting device is a piezoelectric device, and wherein movement of multiple keyboard keys applies kinetic energy to a single piezoelectric device.

13. The wireless input device of claim 1 wherein the user input detecting element comprises keys of a wireless keyboard and the kinetic energy converting device is a piezoelectric device, and wherein movement of one keyboard key applies kinetic energy to a plurality of piezoelectric devices.

14. The wireless input device of claim 1 wherein the user input detecting element is a motion sensing element of a computer mouse and the kinetic energy converting device comprises a generator, and wherein movement of the motion sensing element transfers kinetic energy to the generator.

15. The wireless input device of claim 14 wherein the motion sensing element is a mouse ball.

16. A method of communicating a user input from a wireless input device to a computer, comprising:
a) converting kinetic energy of the user input device to electrical energy;
b) providing said electrical energy to a transmitter; and
c) communicating a user input provided to the user input device to the computer.

17. The method of claim 16 further comprising storing said electrical energy and using stored electrical energy to communicate the user input to the computer.

18. The method of claim 16 wherein the kinetic energy is converted to electrical energy with a piezoelectric device.

19. A kinetic energy utilizing computer system, comprising:
a) a display;
b) a memory in which machine instructions are stored;
c) a system battery;
d) a processor that is coupled to the display, to the memory and to the system battery, the processor executing the machine instructions to carry out a plurality of functions;
e) a user input device in communication with the processor, the user input device, includes:
i) a user input detecting element that detects a user input;
ii) a kinetic energy converting device that converts kinetic energy supplied to the user input device by the user to electrical energy that is used to charge the system battery.

20. The computer system of claim 19 wherein the kinetic energy converting device is a piezoelectric device.

21. The computer system of claim 19 wherein the kinetic energy converting device is a generator.

22. The computer system of claim 19 wherein the user input device is a notebook keyboard.

23. The computer system of claim 22 wherein kinetic energy supplied by pressing the key is converted to electrical energy by the kinetic energy converting device.

24. The computer system of claim 22 wherein the kinetic energy converting device is a piezoelectric device and pressing of a keyboard key applies kinetic energy to the piezoelectric device.

25. The computer system of claim 19 wherein the user input device is a computer mouse.

26. A wireless keyboard for communicating a user input to a computer, comprising:
a) a plurality of keys for entering a user input;
b) a kinetic energy converting device that converts kinetic energy supplied to one or more of the keys by the user to electrical energy;
c) a transmitter provided with signals that are indicative of movement of the keys that uses said electrical energy to communicate said signals to the computer.

27. The wireless keyboard of claim 26 further comprising a battery electrically connected to the kinetic energy converting device and the transmitter, wherein the battery powers the transmitter and is charged by the kinetic energy converting device.

28. The wireless keyboard of claim 26 wherein the kinetic energy converting device is a piezoelectric device.

29. The wireless keyboard of claim 28 wherein the kinetic energy converting device is a piezoelectric transformer.

30. The wireless keyboard of claim 28 wherein the kinetic energy converting device is a piezoelectric actuator.

31. The wireless keyboard of claim 26 wherein the kinetic energy converting device is a generator.

32. The wireless keyboard of claim 26 wherein the kinetic energy converting device is a piezoelectric device and pressing of a keyboard key applies kinetic energy to the piezoelectric device.

33. The wireless keyboard of claim 32 wherein pressing of the keyboard key flexes the piezoelectric device to transfer kinetic energy of the keyboard key to the piezoelectric device.

34. The wireless keyboard of claim 26 wherein the kinetic energy converting device is a piezoelectric device, and wherein movement of multiple keyboard keys applies kinetic energy to a single piezoelectric device.

35. The wireless input device of claim 27 wherein the kinetic energy converting device is a piezoelectric device, and wherein movement of one keyboard key applies kinetic energy to multiple piezoelectric devices.
